# EUROPÄISCHE PATENTSCHRIFT

(11) **EP 3 028 409 B1**
(45) Veröffentlichungstag und Bekanntmachung des Hinweises auf die Patenterteilung: **28.06.2017**
(21) Anmeldenummer: 14753229.5
(22) Anmeldetag: 12.08.2014
(51) Int. Cl.: H04L 12/28

(54) **FILTERN EINES DATENPAKETES DURCH EINE NETZWERKFILTEREINRICHTUNG**
FILTERING A DATA PACKET BY MEANS OF A NETWORK FILTERING DEVICE
FILTRAGE D'UN PAQUET DE DONNÉES PAR UN DISPOSITIF DE FILTRAGE DE RÉSEAU

(30) Priorität: 30.09.2013 DE 102013219698
(43) Veröffentlichungstag der Anmeldung: 08.06.2016
(73) Patentinhaber: Siemens Aktiengesellschaft, 80333 München (DE)
(72) Erfinder: FALK, Rainer, 85586 Poing (DE); VON OHEIMB, David, 85551 Heimstetten (DE); BLÖCHER, Uwe, 82178 Puchheim (DE)
(86) Internationale Anmeldenummer: PCT/EP2014/067239
(87) Internationale Veröffentlichungsnummer: WO 2015/043817

(56) Entgegenhaltungen:
- EP-A1- 2 592 810
- WO-A1-2008/023961
- WO-A2-2007/030520
- US-A1- 2010 082 174

## Beschreibung

Die Erfindung betrifft eine Verfahren und eine Netzwerkfiltereinrichtung zum Filtern eines Datenpaketes zwischen einem ersten Netzwerk und einem zweiten Netzwerk.

An Netzwerkgrenzen werden sogenannte Security Gateways oder Firewalls installiert, um eine kontrollierte Kopplung unterschiedlicher Netzwerkbereiche zu realisieren. Es erfolgt dabei eine Filterung des Netzwerkverkehres, so dass nur zulässiger Netzwerkverkehr durchgelassen wird. Es ist bekannt, ein solches Sicherheitsgateway als Personal Firewall auf einem Endgerät zu integrieren. Insbesondere wird dadurch eine Kopplung unterschiedlich kritischer Netzwerkbereiche überwacht, wobei "unterschiedlich kritisch" beispielsweise bedeutet, dass in einem Netzwerk andere, z. B. strengere Anforderungen an ein zu verarbeitendes Datenpaket gestellt werden.

In industriellen Automatisierungssystemen wie beispielsweise im Umfeld der Bahnautomatisierung in einem Stellwerk oder bei einer Zugsteuerung, im Umfeld einer Fertigungsautomatisierung in einer Produktionshalle oder im Umfeld der Prozessautomatisierungen, beispielsweise in Raffinerien oder Brauereien, werden bezüglich einer funktionellen Sicherheit, auch Safety genannt, kritische Automatisierungsbereiche mit allgemeinen Netzen gekoppelt z. B. ein Büronetzwerk. Dabei werden Firewalls eingesetzt und so konfiguriert, dass nur zugelassener Netzwerkverkehr passieren kann. Eine Datenkommunikation wird dabei gemäß einer konfigurierbaren Netzwerk Security Policy gefiltert, so dass nur zulässiger Datenverkehr weitergeleitet wird. Auch ist es möglich, innerhalb eines Automatisierungsbereichs besonders kritische Teilbereiche mit weniger kritischen Teilbereichen des Automatisierungsbereichs über ein Security Gateway oder eine Firewall zu koppeln. So kann beispielsweise ein Safety-kritischer Automatisierungsteilbereich mit einem allgemeinen Automatisierungsteilbereich gekoppelt werden. Insbesondere können auch zwei jeweils echtzeitkritische Automatisierungsteilbereiche gekoppelt werden.

Es ist dabei von großer Wichtigkeit, dass eine Firewall, welche fehlerhaft ist, d. h. welche nicht erlaubte Datenpakete durchlässt, identifiziert wird. Gründe für eine fehlerhafte Funktionsweise können Fehler in der Implementierung oder der Konfiguration der Firewall sein, oder durch eine Kompromittierung der Firewall durch einen Angriff von extern sein. Solche Fehlfunktionen gilt es zu erkennen und möglichst zu unterbinden.

Es sind im Umfeld von IT-Umgebungen Firewalls verfügbar, welche mehrstufig aufgebaut sind. Dabei werden mehrere, unabhängige Security-Komponenten hintereinander geschaltet, wie beispielsweise zunächst ein Paketfilter und anschließend ein Application Level Gateway, so dass unzulässiger Netzwerkverkehr geblockt wird, wenn zumindest eine Komponente diesen Verkehr blockt. Ein Fehler in einer Firewall-Implementierung führt dadurch noch nicht dazu, dass unzulässiger Netzwerkverkehr passieren kann und stellt somit für Security-relevante Umgebungen, in denen keine Safety-Kriterien oder Echtzeitkriterien erfüllt werden müssen, eine erhöhte Sicherheitsstufe dar.

Es ist aus der Patentanmeldung DE 10 2011 007387 bekannt, eine Selbstüberwachung eines Gateways zu implementieren. Dabei wird überprüft, ob zu einem ausgehenden Datenpaket ein korrespondierendes eingehendes Datenpaket empfangen wurde. Dadurch kann sichergestellt werden, dass ein Gateway aufgrund einer Fehlfunktion nicht selbst Datenpakete erzeugt.

Es ist aus einer Veröffentlichung der Firma Infineon eine Safety-Computing-Plattform bekannt, bei der ein Safety-Monitor-Schaltkreis einen Hauptprozessor und die Softwareausführung auf dem Hauptprozessor überwacht. Er kann insbesondere Tests gegenüber festen Testmustern durchführen sowie Ergebnisse zweier unabhängiger Ausführungen vergleichen. Siehe hierzu auch den Beitrag auf der Webseite http://www.infineon.com/dgdl/Safety-Computing-Platform-XC2300-CIC61508-Product-Brief.pdf?folderId=db3a304317a748360117f45a9c863e84&fileId=db 3a3043353fdc16013543303497315d, aufgerufen am 18.09.2013.

Es ist ein Network Tap als eine allgemein bekannte Netzwerkkomponente bekannt, um übertragene Daten mithören zu können, ohne dass die übertragenen Daten beeinflusst werden. Sie werden im Allgemeinen für eine Netzwerküberwachung eingesetzt, bei der beispielsweise Quality of Service Parameter für Durchsatz oder Latenz durch die Messung nicht beeinflusst werden sollen. Die Funktion eines Network Taps kann von einem Switch realisiert werden, der ein Datenpaket nicht nur weiterleitet, sondern zusätzlich an einen Monitoring-Port kopiert. Man spricht dabei auch von Port-Mirroring, siehe die Veröffentlichung unter http://www.tamos.com/htmlhelp/monitoring/monitoringusingswitc hes.htm, aufgerufen am 18.09.2013.

Als Stand der Technik ist die Patentanmeldung WO-A2-2007/030520 bekannt. Dort ist ein Verfahren zur Kontrolle von Anwendungsdiensten in einem lokalen Netz bestehend aus mehreren unterschiedlichen Teilnetzen offenbart. Die Kontrolle basiert auf der Filterung von Datenpaketen. Eine Kontrolleinheit vervielfältigt die Datenpakete und überprüft die vervielfältigten Datenpaketen, indem sie sie mit vordefinierten Kriterien vergleicht. Nach der Überprüfung können die ursprünglichen Pakete gefiltert werden, indem Filterungsregeln angewandt werden. Diese Filterungsregeln werden ständig durch statistische Daten aktualisiert.

Es besteht ein Bedarf, eine verbesserte Filterung zwischen zwei unterschiedlichen Netzwerkbereichen bereitzustellen. Insbesondere bei der Beteiligung echtzeitkritischer Netzwerke bestehen strenge Anforderungen an Latenz oder Durchsatz an den Datenverkehr. Es ist damit eine Aufgabe der vorliegenden Erfindung, eine effizientere und verbesserte Filterung eines Datenpaketes bereitzustellen.

Diese Aufgabe wird gemäß dem Verfahren und der Netzwerkfiltereinrichtung gemäß den unabhängigen Ansprüchen gelöst. Vorteilhafte Ausgestaltungen sind in den Unteransprüchen angegeben.

Erfindungsgemäß weist ein Verfahren zum Filtern eines Datenpaketes durch eine Netzwerkfiltereinrichtung zwischen einem ersten Netzwerk und einem zweiten Netzwerk die folgenden Schritte auf:
- Vervielfachen des Datenpaketes durch eine Vervielfachungs-Einheit zu einem ersten Datenpaket und mindestens einem zweiten Datenpaket, wobei ein Inhalt des Datenpaketes in dem ersten Datenpaket und mindestens in dem zweiten Datenpaket identisch erzeugt wird;
- Weiterleiten des ersten Datenpaketes an eine erste Filtereinrichtung und mindestens des zweiten Datenpaketes an eine zweite Filtereinrichtung;
- Prüfen des ersten Datenpaketes durch die erste Filtereinrichtung und mindestens des zweiten Datenpaketes durch die zweite Filtereinrichtung gemäß jeweiligen Filtervorschriften;
- Erstellen und Übermitteln eines ersten Filterergebnisses durch die erste Filtereinrichtung und mindestens eines zweiten Filterergebnisses durch die zweite Filtereinrichtung an eine Vergleichs-Einheit;
- Blockieren einer Weiterleitung des Datenpaketes zwischen dem ersten Netzwerk und dem zweiten Netzwerk, falls die Vergleichs-Einheit in Abhängigkeit von dem ersten Filterergebnis und mindestens dem zweiten Filterergebnis ein von einem Toleranzbereich abweichendes Vergleichsergebnis erkennt.

Unter einer Netzwerkfiltereinrichtung wird in der vorliegenden Anmeldung beispielsweise eine Komponente an einer Kopplungsstelle zwischen zwei Netzwerken verstanden, die allen durchgehenden Datenverkehr überprüft. Die Netzwerkfiltereinrichtung umfasst mindestens zwei Filtereinrichtungen, auch Firewalls genannt. Über die Vorgabe von Filtervorschriften werden die Filtereinrichtungen und damit die Netzwerkfiltereinrichtung konfiguriert. Die Filtervorschriften legen damit Regeln fest, nach welchen ein Datenpaket geprüft wird.

Als Vervielfachungseinheit wird beispielsweise ein Splitting Switch verwendet. Ein an einem Port der Vervielfachungseinheit empfangenes Paket wird beispielsweise an zwei Ports, über welche eine Filtereinrichtung angeschlossen ist, übertragen. Dadurch wird das Datenpaket verdoppelt. Der Inhalt des Datenpaketes bleibt dabei jeweils erhalten. Bei dem Schritt des Vervielfachens kann es sich somit um ein Verdoppeln, Verdreifachen usw. handeln.

Bei dem ersten Netzwerk kann es sich beispielsweise um ein unsicheres Netzwerk handeln, bei dem zweiten Netzwerk dagegen um ein Netzwerk, innerhalb dessen Anforderungen an die Echtzeitfähigkeit eines Systems berücksichtigt werden müssen.

Als Vergleichseinheit wird in der folgenden Anmeldung eine Komponente verstanden, welche ein Paket oder mehrere Pakete innerhalb einer Schlange oder Queue mit einem anderem Paket oder einer Schlange von Paketen, welche an einem zweiten Port der Vergleichseinheit zu Verfügung gestellt werden, auf eine Ähnlichkeit hin überprüfen kann. Dabei kann eine Identität zweier Datenpakete festgestellt werden. Es kann ferner ein Toleranzbereich vorgegeben werden, welcher Abweichungen zweier Datenpakete angibt, welche dennoch als identisch eingestuft werden sollen. Damit werden Bit-Fehler, welche beispielsweise durch eine der Filtereinrichtungen in einem der Filterergebnisse vorliegen, als ein innerhalb des Toleranzbereiches liegendes Vergleichsergebnis gewertet. Die Vergleichseinheit kann auch als Combiner-Switch bezeichnet werden.

Als Filterergebnis wird in der vorliegenden Anmeldung ein durch die Filtereinrichtung erstelltes Paket bezeichnet, welches an die Vergleichseinheit übermittelt wird. Es kann sich dabei beispielsweise um das jeweilige empfangene Datenpacket handeln, welches durch die Filtereinrichtung weitergeleitet wird.

Durch den parallelen Betrieb mehrerer Filtereinrichtungen wird eine Netzwerkfiltereinrichtung geschaffen, welche auf einfache Weise die Filterergebnisse der einzelnen Filtereinrichtungen vergleicht und damit eine Überwachung der Funktionsweise der einzelnen Filtereinrichtungen darstellt. Der Aufwand für die Überwachung bleibt damit sehr gering, da lediglich eine Vervielfältigung der eingehenden Datenpakete sowie ein Zusammenführen der Filterergebnisse zum Erstellen des Vergleichsergebnisses nötig ist. Die Latenz, d. h. die Zeit, die für das Filtern des Datenpaketes durch die Netzwerkfiltereinrichtung benötigt wird, ist vorgegeben durch die größte Latenz der beteiligten Filtereinrichtungen. Im Gegensatz zu einer Konstruktion mit einer einzigen Firewall ist sie gegebenenfalls nicht größer oder je nach Ausgestaltung einer parallel verbauten Firewall geringfügig größer.

Damit wird ein definiertes Zeitverhalten sichergestellt. Handelt es sich beispielsweise bei dem zweiten Netzwerk um ein Safety-kritisches System, so wird durch das vorgeschlagene Verfahren eine Rückwirkungsfreiheit auf das Safety-kritische System bei gleichzeitig zuverlässiger Filterung eingehender Datenpakete ermöglicht.

Gemäß einer Ausgestaltung sind die jeweiligen Filtervorschriften identisch und die erste Filtereinrichtung und die zweite Filtereinrichtung werden mit unterschiedlichen Betriebssystemen ausgebildet und oder von unterschiedlichen Herstellern hergestellt. Identisch bedeutet hierbei, dass die jeweiligen Filtervorschriften zum gleichen Filter-Ergebnis führen. Sie können eine gleiche oder eine unterschiedliche Syntax aufweisen. Ferner kann eine Filtervorschrift auf unterschiedliche Art aufgebaut sein. Dies wird insbesondere der Fall sein, wenn sie von verschiedenen Administratoren erstellt und gewartet werden.

Die doppelte Filterung verursacht damit keine aufwendige neue Konfiguration. Es wird jeweils nach identischen Filtervorschriften gefiltert. Durch das Verwenden unterschiedlicher Betriebssysteme oder Hersteller wird die Wahrscheinlichkeit eines systematischen, gleichen Fehlers in allen Firewalls stark verringert.

Die Verwendung verschiedener Betriebssysteme streut das Risiko von Fehlern aufgrund einer Implementierung. Es können somit gegebenenfalls vorhandene Schwachstellen eines der Betriebssysteme ausgeglichen werden. Ferner kann es sich auch um Fehler innerhalb der Anwendungssoftware, insbesondere der jeweiligen Firewall-Applikation handeln. Typische Fehlerquellen sind hierbei Speicherüberläufe bei einer Ausführung eines Programms, welche Teile eines Programmcodes löschen können.

Durch die Wahl verschiedener Hersteller der jeweiligen Firewall kann bei identischem Regelsatz und jeweils fehlerfreier Implementierung dennoch eine unterschiedliche Implementierung gewährleistet werden, welche einerseits gegebenenfalls unterschiedliche Schwachstellen aufweist sowie andererseits aus Sicht eines Angreifers unterschiedliche Sicherheitshürden bereitstellt. Auch ist es möglich, dass die beiden Filtervorschriften von unterschiedlichen Administratoren erstellt und aktualisiert werden. Eine fehlerhafte Konfiguration einer der beiden Filtervorschriften kann dabei erkannt werden, wenn ein Datenpaket nur von einer Filtervorschrift zugelassen wird.

Gemäß einer Weiterbildung wird durch das Blockieren ein Alarmsignal ausgegeben.

Der Alarm signalisiert eine inkonsistente Filterung und kann automatische Vorsichtsmaßnahmen einleiten. Beispielsweise können verantwortliche Stellen, wie beispielsweise ein Netzwerkadministrator oder Firewall-Hersteller oder Firewall-Administrator, verständigt werden.

Gemäß einer Ausgestaltung wird durch das Blockieren ein Datenverkehr zwischen dem ersten Netzwerk und dem zweiten Netzwerk blockiert.

Beispielsweise können - unabhängig von oder gemeinsam mit einem Ausgeben eines Alarmsignales - Netzwerkverbindungen unterbrochen oder eine Firewall abgeschaltet werden, welche im Vergleich zu einer anderen Firewall mehr Datenpakete durchgelassen hat.

Gemäß einer Ausgestaltung wird das Blockieren durchgeführt, falls das erste Filterergebnis und das zweite Filterergebnis mit einem zeitlichen Abstand übermittelt werden und der zeitlich Abstand außerhalb eines vorgebbaren Zeitintervalls liegt.

Somit ist eine maximale Zeitspanne vorgegeben, innerhalb derer ein an einem der Ports der Vergleichseinheit zur Verfügung gestelltes Paket noch zum Abgleich mit einem vorher am anderen Port empfangenes Paket herangezogen werden kann.

Gemäß einer Weiterbildung wird als erstes Filterergebnis das erste Datenpaket und/oder als zweites Filterergebnis das zweite Datenpaket übermittelt, falls das jeweilige Datenpaket aufgrund der jeweiligen Filtervorschrift als gültig erkannt wird.

Die Einstufung als gültiges Datenpaket wird über die Filtervorschriften festgelegt. Ist beispielsweise durch die Filtervorschriften ein IP-Adressbereich angegeben, welcher zu einer Einstufung als ungültiges Datenpaket führen soll, so wird beispielsweise die Ziel-IP-Adresse des eingehenden Datenpaketes mit dem vorgegebenen IP-Adressbereich abgeglichen und das Datenpaket als gültig erkannt, wenn die IP-Zieladresse nicht Bestandteil des IP-Adressbereiches ist.

In den dem Fall, dass das jeweilige Datenpaket als gültig erkannt wird, wird es also lediglich weitergeleitet. D. h. es wird nicht verändert. Bis auf Bitfehler kann es mit dem eingehenden Datenpaket identisch sein.

Gemäß einer Ausgestaltung wird als erstes Filterergebnis kein Paket übermittelt, falls das jeweilige Datenpaket aufgrund der jeweiligen Filtervorschrift als ungültig erkannt wird.

Es wird in diesem Fall durch die jeweilige Filtereinrichtung, welche aufgrund der Konfiguration der Filtervorschrift das Datenpaket nicht als gültig, d.h. als ungültig erkennt, also kein Paket weitergeleitet. Somit erhält die Vergleichseinheit insbesondere von einer oder mehreren Filtereinrichtungen ein Filterergebnis und insbesondere von einer oder mehreren Filtereinrichtungen, welche das jeweilige Datenpaket als ungültig erkennen, kein Filterergebnis.

Gemäß einer Ausgestaltung werden der Vergleichseinheit das jeweilige Filterergebnis sowie weitere Filterergebnisse aus einem zeitlich nachfolgenden weiteren Prüfen durch die jeweilige Filtereinrichtung vorgelegt, und zur Ermittlung des Vergleichsergebnisses die weiteren Filterergebnisse berücksichtigt.

Die Vergleichseinheit, auch Packet Comparator genannt, erhält beispielsweise von einer ersten Eingangswarteschlange der ersten Filtereinrichtung eine Liste von Datenpaketen, welche von der ersten Filtereinrichtung weitergeleitet wurden. D.h. die erste Filtereinrichtung hat dem Datenpaket ein Filterergebnis übermittelt. Von der zweiten Filtereinrichtung erhält der Packet Comparator beispielsweise eine Eingangswarteschlange, in der weniger Datenpakete enthalten sind, da die zweite Filtereinrichtung ungültige Datenpakete erkannt hat und diese nicht weitergeleitet hat. Erhält nun die Vergleichseinheit innerhalb eines vorgegebenen Zeitintervalls am Port der zweiten Filtereinrichtung kein Filterergebnis, welches zu einem Filterergebnis in der ersten Eingangswarteschlange passt, so wird das Datenpaket blockiert. Auch wenn also das Datenpaket in Form von einem Filterergebnis der ersten Filtereinrichtung vorliegt und aufgrund der Einschätzung oder Auswertung der ersten Filtereinrichtung weitergeleitet werden würde, so wird dennoch das Datenpaket nicht weitergeleitet, da ein entsprechendes Filterergebnis von der zweiten Filtereinrichtung nicht geliefert wird.

Gemäß einer Ausgestaltung wird als erstes Filterergebnis und/oder als zweites Filterergebnis ein jeweiliges Ersatzpaket übermittelt, falls das jeweilige Datenpacket aufgrund der jeweiligen Filtervorschrift als ungültig erkannt wird.

Damit wird in jedem Fall ein Filterergebnis an die Vergleichseinheit übermittelt. Im Falle einer Einstufung als gültiges Datenpaket handelt es sich dann bei dem Filterergebnis um das ursprüngliche Datenpaket, welches weitergeleitet wird, und bis auf gegebenenfalls vorhandene Bitfehler mit dem empfangenen Datenpaket identisch ist. Wird dagegen das empfangene Datenpaket als ungültig eingestuft, so wird als Filterergebnis ein Ersatzpaket übermittelt.

Insbesondere vereinfacht das Übermitteln eines Ersatzpaketes den Abgleich durch die Vergleichseinheit für den Fall, dass eine Auswertung beispielsweise des zweiten Datenpaketes durch die zweite Filtereinrichtung länger dauert als die Auswertung des ersten Datenpaketes durch die erste Filtereinrichtung. Wird in jedem Fall ein Paket, nämlich bei negativer Überprüfung ein Ersatzpaket, übermittelt, so bedeutet das Fehlen eines der zu überprüfenden jeweiligen Pakete, dass eine Überprüfung noch andauert. Es kann klar zwischen verspäteter Übermittlung und blockierter Übermittlung unterschieden werden.

Die Verwendung eines Ersatzpaketes reduziert ferner auf vorteilhafte Weise die Gefahr, dass zufällig gleiche Pakete miteinander verglichen werden und aufgrund einer Übereinstimmung durch die Vergleichseinheit weitergeleitet werden.

Die Erfindung betrifft ferner eine Netzwerkfiltereinrichtung zum Filtern eines Datenpaketes zwischen einem ersten Netzwerk und einem zweiten Netzwerk, umfassend:
- eine Vervielfachungs-Einheit zum Vervielfachen des Datenpaketes zu einem ersten Datenpaket und mindestens einem zweiten Datenpaket, wobei ein Inhalt des Datenpaketes in dem ersten Datenpaket und mindestens in dem zweiten Datenpaket identisch erzeugbar ist, und zum Weiterleiten des ersten Datenpaketes zu einer ersten Filtereinrichtung sowie mindestens des zweiten Datenpaktes zu einer zweiten Filtereinrichtung;
- die erste Filtereinrichtung zum Prüfen des ersten Datenpaketes und die zweite Filtereinrichtung zum Prüfen des zweiten Datenpaketes gemäß jeweiligen Filtervorschriften und zum jeweiligen Übermitteln eines ersten Filterergebnisses und mindestens eines zweiten Filterergebnisses an eine Vergleichs-Einheit;
- die Vergleichs-Einheit zum Blockieren des Datenpaketes, falls in Abhängigkeit von dem ersten Filterergebnis und mindestens dem zweiten Filterergebnis ein von einem Toleranzbereich abweichendes Vergleichsergebnis erkennbar ist.

Ferner umfasst die Netzwerkfiltereinrichtung gemäß einer Ausgestaltung eine Überwachungseinheit zum Ausführen einer der Verfahrensschritte gemäß den oben genannten Ausführungsformen oder Weiterbildungen.

Die Erfindung wird im Nachfolgenden mit Ausführungsbeispielen anhand der Figuren näher erläutert. Obwohl die Erfindung im Detail durch die Ausführungsbeispiele näher illustriert und beschrieben wird, so ist die Erfindung nicht durch die offenbarten Beispiele eingeschränkt und andere Variationen können vom Fachmann hieraus abgeleitet werden, ohne den Schutzumfang der Erfindung zu verlassen.

Es zeigen:
- Figur 1: eine schematische Darstellung der Netzwerkfiltereinrichtung gemäß einem ersten Ausführungsbeispiel der Erfindung;
- Figur 2: eine schematische Darstellung des Verfahrens gemäß einer zweiten Ausführung der Erfindung;
- Figur 3: eine schematische Darstellung einer Netzwerkfiltereinrichtung gemäß einem dritten Ausführungsbeispiel der Erfindung.

In den Figuren sind funktionsgleiche Elemente mit denselben Bezugszeichen versehen, sofern nichts anderes angegeben ist.

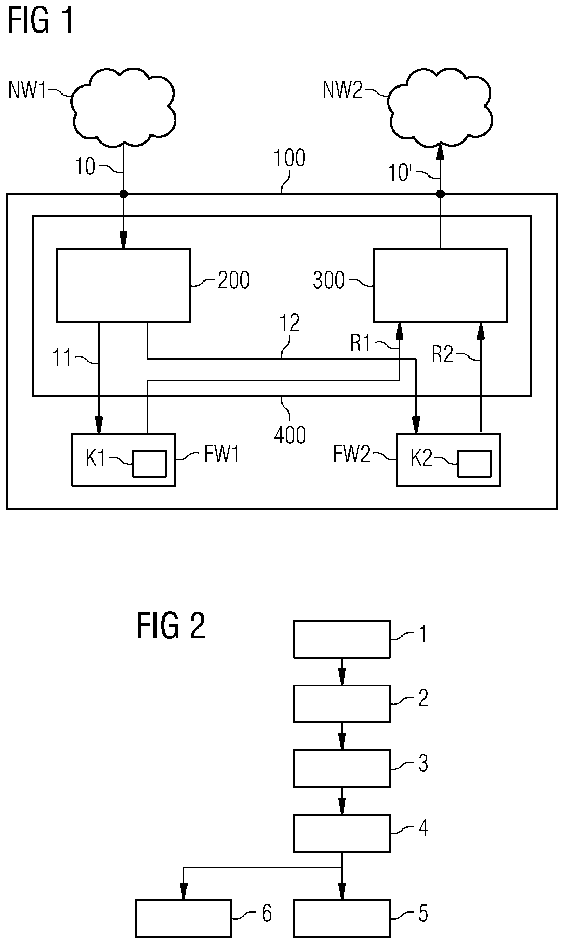

In Figur 1 ist eine Netzwerkfiltereinrichtung 100 abgebildet, welche eine Vervielfachungseinheit 200 sowie eine Vergleichseinheit 300 umfasst sowie eine erste Filtereinrichtung FW1 und eine zweite Filtereinrichtung FW2. Die Vervielfachungseinheit 200 erhält an einem Port ein Datenpaket 10 aus einem ersten Netzwerk NW1. Bei dem ersten Netzwerk NW1 handelt es sich beispielsweise um ein Büronetzwerk oder Firmennetzwerk. Im ersten Netzwerk NW1 bestehen keine Echtzeitanforderungen und es ist insbesondere ein Zugriff aus dem Internet möglich. Aus Sicht der Security oder Angriffssicherheit bestehen hier Schwachstellen. Die Vervielfachungseinheit 200 verdoppelt das Datenpaket 10 beispielsweise und erstellt ein erstes Datenpaket 11 sowie ein zweites Datenpaket 12. Die jeweiligen Inhalte der jeweiligen Datenpakete 11, 12 sind dabei identisch.

Das erste Datenpaket 11 wird an die erste Filtereinrichtung FW1 weitergeleitet. Bei der ersten Filtereinrichtung FW1 handelt es sich um eine erste Firewall, welche konfigurierbare Filtervorschriften K1 oder Filterregeln aufweist. Die Firewall überprüft das eingehende erste Datenpaket 11 auf Anforderungen hin, welche durch die Filtervorschriften K1 gegeben sind. Insbesondere weist die erste Filtereinrichtung FW1 eine erste Filtervorschrift K1 auf, welche einen IP-Adressbereich vorgibt, aus welchem das Datenpaket 10 abgeschickt worden sein muss, damit es durch die erste Filtereinrichtung FW1 als gültig eingestuft wird. Die Filtervorschrift K1 kann in einer Variante auch zulässige Protokolle, Portnummern oder Dateninhalte vorgeben.

Es können ferner Absenderapplikationen oder Zielapplikationen vorgegeben sein, die als Hinweis auf ein vorzunehmendes Blockieren eines Datenpaketes gewertet werden. Es können zusätzlich zu bestehenden Kommunikationsverbindungen Zustandsdaten über verwendete Protokolle, wie insbesondere User Datagramm Protocol oder Transmission Control Protocol oder Übertragungssteuerungsprotokoll, oder ein Zustand des Verbindungsaufbaus gespeichert werden. Bei ankommenden Datenpaketen wird diese Information bei der Filterung berücksichtigt. Außerdem filtert die Firewall beispielsweise aufgrund von Informationen auf Anwendungsebene. Das bedeutet eine weitergehende Analyse, die eine verbesserte Bewertung der Datenpakete erlaubt. Eine auf Anwendungsebene arbeitende Firewall verknüpft dabei insbesondere IP-Pakete und prüft dabei auf Vorhandensein einer sinnvollen Einheit, die sich durch das Zusammensetzen ergibt.

Erfüllt das erste Datenpaket 11 die Anforderungen der ersten Filtereinrichtung FW1, so wird es in Form eines ersten Filterergebnisses R1 an eine Vergleichseinheit 300 weitergeleitet.

Parallel dazu wird das zweite Datenpaket 12 an eine zweite Filtereinrichtung FW2 weitergeleitet. Die zweite Filtereinrichtung FW2 weist zweite Filtervorschriften K2 auf, welche mit den ersten Filtervorschriften K1 übereinstimmen. Bei der zweiten Filtereinrichtung FW2 handelt es sich um eine zweite Firewall, welche beispielsweise auf einer Hardware mit einem Betriebssystem ausgeführt wird, welches ein anderes Betriebssystem als das der ersten Filtereinrichtung FW1 ist.

Stellt auch die zweite Filtereinrichtung FW2 fest, dass das zweite Datenpaket 12 die Anforderungen, die sich aus der zweiten Filtervorschrift K2 ergeben, erfüllt, so wird auch durch die zweite Filtereinrichtung FW2 ein zweites Filterergebnis R2 in Form des weitergeleiteten zweiten Datenpaketes 12 ausgegeben und an die Vergleichseinheit 300 gesendet. Der Vergleichseinheit 300 werden nun in einer Gegenüberstellung, beispielsweise einer Tabelle, das erste Filterergebnis R1 sowie das zweite Filterergebnis R2 bereitgestellt.

Erkennt die Vergleichseinheit 300 eine Übereinstimmung des ersten Filterergebnisses R1 mit dem zweiten Filterergebnis R2, insbesondere, da die durch die Vervielfachungseinheit 200 erstellten jeweiligen Datenpakete 11 und 12 unverändert weitergeleitet wurden und damit identisch sind, so wird ein geprüftes Datenpaket 10' an das zweite Netzwerk NW2 weitergeleitet. Es kann dabei das erste Filterergebnis R1 oder das zweite Filterergebnis R2 als Datenpaket 10' weitergeleitet werden.

Bei dem zweiten Netzwerk NW2 handelt es sich um ein Safety-kritisches Automatisierungsnetzwerk im Umfeld der Prozessautomatisierung. Anforderungen, welche an Daten gestellt werden, die von extern an das zweite Netzwerk NW2 übermittelt werden, sind sehr hoch, da beispielsweise durch die Daten Betriebszustände eingestellt werden. Bei einer Fehlfunktion einer Firewall, welche eine Kopplungsstelle zu einem externen Netzwerk darstellt, könnten somit beispielsweise Konfigurationen eingestellt werden, welche die Betriebssicherheit innerhalb einer Anlage gefährden.

Für den Fall, dass mindestens eine der jeweiligen Filtereinrichtungen FW1, FW2 das jeweilige Datenpaket 11, 12 als ungültig einstuft, wird das Übermitteln des jeweiligen Filterergebnisses R1, R2 verhindert. Die Vergleichseinheit 300 kann damit insbesondere dem ersten Filterergebnis R1 kein korrespondierendes Filterergebnis R2 zuordnen. In diesem Fall wird das Datenpaket 10 blockiert.

Die Vergleichseinheit 300, auch Packet Comparator genannt, betrachtet nicht nur jeweils einen Eintrag aus der jeweiligen Eingangswarteschlange der jeweiligen Filtereinrichtung FW1, FW2, sondern vergleicht jeweils mehrere Einträge, d. h. Filterergebnisse, welche in einer zeitlichen Abfolge durch die jeweilige Filtereinrichtung FW1, FW2 gefiltert und weitergeleitet wurden. Sobald ein identisches Paket in beiden Warteschlangen enthalten ist, wobei sich die Pakete auch an unterschiedlichen Positionen innerhalb der Warteschlange befinden können, so wird es aus der Warteschlange entnommen und an den mit dem zweiten Netzwerk NW2 verbundenen Port gesendet. Dabei können zwei Filterergebnisse R1, R2 als identisches Paket erkannt werden, falls bis auf Bitfehler eine Übereinstimmung in den Daten vorliegt.

Damit kann auf vorteilhafte Weise auch ein Ändern der Reihenfolge der zu filternden jeweiligen Datenpakete 11, 12 durch die jeweilige Filtereinrichtung FW1, FW2 vorgenommen werden. Dies kann aufgrund von Echtzeitanforderungen vorgegeben sein. So kann die Reihenfolge der jeweiligen Datenpakete 11, 12, die an die jeweilige Filtereinrichtung FW1, FW2 übermittelt wurden, nicht mit der Reihenfolge der zugehörigen Filterergebnisse übereinstimmen. Dies kann insbesondere durch eine Priorisierung der Fall sein, welche durch die jeweilige Filtereinrichtung FW1, FW2 vorgenommen wird. Eine Priorisierung kann beispielsweise dann vorteilhaft sein, wenn Echtzeitanforderungen an den Datenverkehr bestehen und daher die jeweilige Filtereinrichtung FW1, FW2 das Prüfen eines speziell gekennzeichneten Datenpaketes vorzieht.

Insbesondere ist es bei dem Abgleich mehrerer jeweiliger Filterergebnisses R1, R2, beispielsweise bei 2, 3, 5 oder 8 Einträgen je Warteschlange, vorteilhaft, zusätzlich ein Zeitintervall vorzugeben, innerhalb dessen der Abgleich der jeweiligen Filterergebnisse R1, R2 vorzunehmen ist. Nach Ablauf dieses Zeitintervalls wird das Datenpaket 10 nicht weitergeleitet und der jeweilige Filterergebniseintrag aus der Liste entnommen.

Für Implementierungen, für welche eine Priorisierung der jeweiligen Datenpakete 11, 12 von Bedeutung ist, ist es vorteilhaft, mehrere Ausgangswarteschlangen bzw. Eingangswarteschlangen an der jeweiligen Schnittstelle zur jeweiligen Filtereinrichtung FW1, FW2 einzurichten. Das Vergleichen durch die Vergleichseinheit 300 kann dann je Eingangswarteschlange vorgenommen werden, wobei jede Warteschlange beispielsweise für eine unterschiedliche Quality-of-Service-Klasse steht.

Figur 2 zeigt ein schematisches Ablaufdiagramm bei einer Anwendung des Verfahrens gemäß einem zweiten Ausführungsbeispiel der Erfindung. Auf ein Vervielfachen 1 des Datenpaketes durch eine Vervielfachungseinheit zu einem ersten Datenpaket und mindestens einem zweiten Datenpaket folgt das Weiterleiten 2. Bei dem Weiterleiten 2 wird sowohl das durch die Vervielfachungseinheit erzeugte erste Datenpaket an eine erste Filtereinrichtung als auch das durch die Vervielfachungseinheit erzeugte zweite Datenpaket in eine zweite Filtereinrichtung weitergeleitet.

Im Anschluss folgt ein Prüfen 3 des ersten Datenpakets durch die erste Filtereinrichtung und ein Prüfen 3 des mindestens einen zweiten Datenpakets durch die zweite Filtereinrichtung. Schließlich folgt das Erstellen eines jeweiligen Filterergebnis und Übermitteln 4 des jeweiligen Filterergebnisses an eine Vergleichseinheit.

Die Schritte des Weiterleitens 2, Prüfens 3 und Erstellens und Übermittelns 4 werden in parallelen Verfahren durchgeführt. Parallel bedeutet dabei, dass Verfahrensschritte durchgeführt werden, welche durch parallel im Prozess angeordnete Komponenten durchgeführt werden. Dabei wird eine Komponente nach ihrer Funktionsweise, also ihrer logischen Einordnung in der Netzwerkfiltereinrichtung eingeordnet.

Parallel bedeutet ferner, dass die Schritte in einer zeitlichen Abfolge gleichzeitig, also zeitlich parallel zueinander ausgeführt werden.

Auf den Schritt des Erstellens und Übermittelns 4 des jeweiligen Filterergebnisses folgt das Blockieren 5 des Datenpaketes, falls die Vergleichseinheit in Abhängigkeit von dem ersten Filterergebnis und mindestens dem zweiten Filterergebnis ein von einem Toleranzbereich abweichendes Vergleichsergebnis erkennt.

Für ein Vergleichsergebnis, welches innerhalb des Toleranzbereiches liegt und von daher auf ein gültiges Datenpaket, das durch beide Firewalls nicht herausgefiltert wurde, hinweist, findet ein Bereitstellen 6 eines geprüften Datenpaketes an das zweite Netzwerk statt.

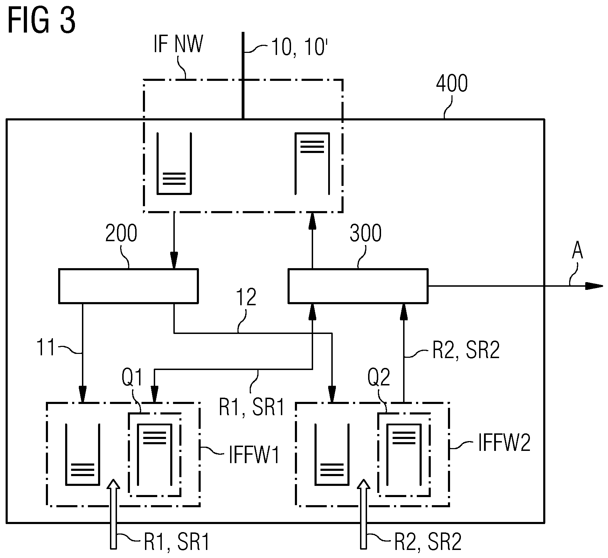

Figur 3 zeigt, wie gemäß einem dritten Ausführungsbeispiel der Erfindung ein Splitting/Combiner Switch 400 die Vervielfachungseinheit 200 sowie die Vergleichseinheit 300 umfasst. Es ist ferner eine Schnittstelle IFNW zum ersten Netzwerk sowie zum zweiten Netzwerk gezeigt. Von dort erhält der Splitting/ Combiner Switch das zu filternde Datenpaket 10 insbesondere von einem echtzeitkritischen Automatisierungsteilbereich. Das durch die Vervielfältigungseinheit 200 erzeugte erste Datenpaket 11 wird an eine erste Filtereinrichtung über eine erste Filter-Schnittstelle IFFW1 gesendet. Zum Senden wird es an der ersten Filter-Schnittstelle IFFW1 in einer Ausgangswarteschlange hinterlegt. Ein von der ersten Filtereinrichtung bereitgestellte Filterergebnis R1 wird in der Eingangswarteschlange Q1 der ersten Filter-Schnittstelle IFFW1 abgelegt.

Der Vorgang wird entsprechend für das zweite Datenpaket 12 an einer zweiten Filter-Schnittstelle IFFW2 zu einer zweiten Filtereinrichtung ausgeführt. Dort wird ein Filterergebnis R2 in der jeweiligen Eingangswarteschlange Q2 hinterlegt. Stellt die zweite Filtereinrichtung ein ungültiges zweites Datenpaket 12 fest, so liefert sie als Filterergebnis R2 ein zweites Ersatzpaket SR2. Der Vergleichseinheit 300 oder dem sogenannten Packet Comparator werden dann zwei Filterergebnisse R1, SR2 vorgelegt, welche nicht übereinstimmen, da es sich bei dem Ersatzpaket SR2 um ein standardisiertes, durch die zweite Filtereinrichtung gekennzeichnetes Paket handelt.

Die Filter-Schnittstellen IFFW1, IFFW2 können als lokale Schnittstelle, beispielsweise als eine SPI-Schnittstelle, PCI-Schnittstelle, USB-Schnittstelle, Ethernet-Schnittstelle realisiert sein. Sie können ebenso als Remote Schnittstellen realisiert sein, wobei ein jeweiliges Datenpaket 11, 12 und die jeweiligen Filterergebnisse R1, R2, SR1, SR2 über eine Internet-Verbindung, z.B. eine HTTP-Verbindung oder eine TCP-Verbindung, übertragen werden. Die Filter-Schnittstellen IFFW1, IFFW2 können dabei identisch oder unterschiedlich realisiert sein.

Der Vergleichseinheit liegt ein Toleranzbereich vor, innerhalb dessen bei Abweichungen der jeweiligen Filterergebnisse R1, R2 ein Vergleichsergebnis erkannt wird, aufgrund dessen eine Weiterleitung des Datenpaketes dennoch erfolgt.

Aufgrund eines Abgleichs des durch die erste Filtereinrichtung weitergeleiteten ersten Datenpaketes 11 als erstes Filterergebnis R1 mit dem zweiten Ersatzpaket SR2, welches von der zweiten Filtereinrichtung bereitgestellt wird, liegt ein Vergleichsergebnis vor, welches nicht innerhalb des Toleranzbereiches liegt. Das Datenpaket 10 wird nicht an einen zweiten, ebenfalls echtzeitfähigen Automatisierungsteilbereich weitergeleitet.

Erkennt in einer Variante auch die erste Filtereinrichtung das erste Datenpaket 11 als ungültig, so handelt es sich bei dem ersten Filterergebnis R1 um ein erstes Ersatzpaket SR1. Das erste Ersatzpaket SR1 ist durch die erste Filtereinrichtung gekennzeichnet und das Vergleichsergebnis durch den Abgleich des ersten Ersatzpaketes SR1 mit dem zweiten Ersatzpaket SR2 liegt außerhalb des Toleranzbereiches.

Auf vorteilhafte Weise reduziert die Verwendung eines Ersatzpaketes die Gefahr, dass zufällig gleiche Pakete, welche hintereinander verschickt werden, weitergeleitet werden, auch wenn eine der verbauten Filtereinrichtungen das Paket nicht weiterleitet. Wird beispielsweise als erstes Filterergebnis R1 ein Paket P1 bereitgestellt und wird durch die zweite Filtereinrichtung die Weiterleitung blockiert und kein Ersatzpaket bereitgestellt, so wird der Vergleich des ersten Filterergebnisses R1 gegenüber beispielsweise einem nachfolgenden zweiten Filterergebnisses R2, welches aus einer nachfolgenden Filterung eines später versandten Datenpaketes entstand, abgeglichen. Handelt es sich dabei nun zufälligerweise um ein dem ersten Paket P1 identisches Paket P2, so würde das Blockieren durch die zweite Filtereinrichtung nicht erkannt werden.

Es werden hier zwei jeweils echtzeitkritische Automatisierungsteilbereiche miteinander gekoppelt. Dabei wird mittels der vorgestellten Netzwerkfiltereinrichtung ein Datenpaket mehrfach parallel geprüft, wodurch die Robustheit ohne eine wesentliche zusätzliche Zeitverzögerung erhöht wird.

In einer Variante wird durch die Vergleichseinheit 300 ein Alarmsignal A ausgegeben, falls der Vergleichseinheit 300 durch mindestens eine der Filtereinrichtungen ein Ersatzpaket SR1, SR2, bereitgestellt wird. Insbesondere kann das Weiterleiten des Datenpaketes 10 blockiert werden, falls durch alle beteiligten Filtereinrichtungen ein Ersatzpaket bereitgestellt wird. In diesem Fall kann ein Alarmsignal A ausbleiben, da der Netzwerkfiltereinrichtung mit allen ihren beteiligten Filtereinrichtungen dann eine korrekte Funktionsweise bescheinigt wird.

In einer Variante wird durch die Netzwerkfiltereinrichtung in Abhängigkeit von dem Alarmsignal eine Benachrichtigung eines Überwachungssystems veranlasst. Dadurch kann ein Notfallsignal ausgegeben werden, welches beispielsweise die Überprüfung durch Servicepersonal oder durch eine Überwachungskomponente einer Anlage beispielsweise innerhalb des zweiten Netzwerkes veranlasst.

Die jeweiligen Einheiten wie Netzwerkfiltereinrichtung, Vervielfachungseinheit, die jeweilige Filtereinrichtung, Vergleichseinheit sowie die Überwachungseinheit können hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

## Patentansprüche

1. Verfahren zum Filtern eines Datenpaketes (10) durch eine Netzwerkfiltereinrichtung (100) zwischen einem ersten Netzwerk (NW1) und einem zweiten Netzwerk (NW2) aufweisend die folgenden Schritte:
- Vervielfachen (1) des Datenpaketes (10) durch eine Vervielfachungs-Einheit (200) zu einem ersten Datenpaket (11) und mindestens einem zweiten Datenpaket (12), wobei ein Inhalt des Datenpaketes (10) in dem ersten Datenpaket (11) und mindestens in dem zweiten Datenpaket (12) identisch erzeugt wird;
- Weiterleiten (2) des ersten Datenpaketes (11) an eine erste Filtereinrichtung (FW1) und mindestens des zweiten Datenpaketes (12) an eine zweite Filtereinrichtung (FW2);
- Prüfen (3) des ersten Datenpaketes (11) durch die erste Filtereinrichtung (FW1) und mindestens des zweiten Datenpaketes (12) durch die zweite Filtereinrichtung (FW2) gemäß jeweiligen Filtervorschriften (K1, K2);
- Erstellen und Übermitteln (4) eines ersten Filterergebnisses (R1) durch die erste Filtereinrichtung (FW1) und mindestens eines zweiten Filterergebnisses (R2) durch die zweite Filtereinrichtung (FW1) an eine Vergleichs-Einheit (300);
- Blockieren (5) einer Weiterleitung des Datenpaketes (10) zwischen dem ersten Netzwerk (100) und dem zweiten Netzwerk (200), falls die Vergleichs-Einheit (300) in Abhängigkeit von dem ersten Filterergebnis (R1) und mindestens dem zweiten Filterergebnis (R2) ein von einem Toleranzbereich abweichendes Vergleichsergebnis erkennt.

2. Verfahren nach Anspruch 1, wobei die jeweiligen Filtervorschriften (K1, K2) identisch sind und die erste Filtereinrichtung (FW1) und die zweite Filtereinrichtung (FW2) mit unterschiedlichen Betriebssystemen ausgebildet werden und/ oder von unterschiedlichen Herstellern hergestellt werden.

3. Verfahren nach Anspruch 1 oder 2, wobei durch das Blockieren (5) ein Alarmsignal (A) ausgegeben wird.

4. Verfahren nach einem der vorstehenden Ansprüche, wobei durch das Blockieren (5) ein Datenverkehr zwischen dem ersten Netzwerk (NW1) und dem zweiten Netzwerk (NW2) blockiert wird.

5. Verfahren nach einem der vorstehenden Ansprüche, wobei das Blockieren (5) durchgeführt wird, falls das erste Filterergebnis (R1) und das zweite Filterergebnis (R2) mit einem zeitlichen Abstand übermittelt werden und der zeitliche Abstand außerhalb eines vorgebbaren Zeitintervalls liegt.

6. Verfahren nach einem der vorstehenden Ansprüche, wobei als erstes Filterergebnis (R1) das erste Datenpaket (11) und/ oder als zweites Filterergebnis (R2) das zweite Datenpaket (12) übermittelt wird, falls das jeweilige Datenpaket (11, 12) aufgrund der jeweiligen Filtervorschrift (K1, K2) als gültig erkannt wird.

7. Verfahren nach einem der Ansprüche 1 bis 6, wobei als erstes Filterergebnis (R1) und/ oder als zweites Filterergebnis (R2) ein jeweiliges Ersatzpaket (SR1, SR2) übermittelt wird, falls das jeweilige Datenpaket (11, 12) aufgrund der jeweiligen Filtervorschrift (K1, K2) als ungültig erkannt wird.

8. Verfahren nach einem der vorstehenden Ansprüche, wobei der Vergleichseinheit (300) das jeweilige Filterergebnis (R1, R2) sowie weitere Filterergebnisse aus einem zeitlich nachfolgenden weiteren Prüfen durch die jeweilige Filtereinrichtung (FW1, FW2) vorgelegt werden, und zur Ermittlung des Vergleichsergebnisses die weiteren Filterergebnisse berücksichtigt werden.

9. Netzwerkfiltereinrichtung (100) zum Filtern eines Datenpaketes (10) zwischen einem ersten Netzwerk (NW1) und einem zweiten Netzwerk (NW2), umfassend:
- eine Vervielfachungs-Einheit (200) zum Vervielfachen (1) des Datenpaketes (10) zu einem ersten Datenpaket (11) und mindestens einem zweiten Datenpaket (12), wobei ein Inhalt des Datenpaketes (10) in dem ersten Datenpaket (11) und mindestens in dem zweiten Datenpaket (12) identisch erzeugbar ist, und zum Weiterleiten des ersten Datenpaketes (11) zu einer ersten Filtereinrichtung (FW1) sowie mindestens des zweiten Datenpaktes (12) zu einer zweiten Filtereinrichtung (FW2);
- die erste Filtereinrichtung (FW1) zum Prüfen (3) des ersten Datenpaketes (11) und die zweite Filtereinrichtung (FW2) zum Prüfen (3) des zweiten Datenpaketes (12) gemäß jeweiligen Filtervorschriften (K1, K2) und zum jeweiligen Übermitteln eines ersten Filterergebnisses (R1) und mindestens eines zweiten Filterergebnisses (R2) an eine Vergleichs-Einheit (300) ;
- die Vergleichs-Einheit (300) zum Blockieren (5) des Datenpaketes (10), falls in Abhängigkeit von dem ersten Filterergebnis (R1) und mindestens dem zweiten Filterergebnis (R2) ein von einem Toleranzbereich abweichendes Vergleichsergebnis erkennbar ist.

10. Netzwerkfiltereinrichtung (100) nach Anspruch 9, ferner umfassend eine Überwachungseinheit zum Ausführen einer der Verfahrensschritte gemäß den Ansprüchen 3 bis 5.

## Claims

1. Method for filtering a data packet (10) by means of a network filter device (100) between a first network (NW1) and a second network (NW2), having the following steps:
- multiplication (1) of the data packet (10) by a multiplication unit (200) to produce a first data packet (11) and at least one second data packet (12), wherein a content of the data packet (10) is produced identically in the first data packet (11) and at least in the second data packet (12);
- forwarding (2) of the first data packet (11) to a first filter device (FW1) and at least of the second data packet (12) to a second filter device (FW2);
- checking (3) of the first data packet (11) by the first filter device (FW1) and at least of the second data packet (12) by the second filter device (FW2) according to respective filter specifications (K1, K2);
- production and transmission (4) of a first filter result (R1) by the first filter device (FW1) and at least of a second filter result (R2) by the second filter device (FW1) to a comparison unit (300);
- blocking (5) of forwarding of the data packet (10) between the first network (100) and the second network (200) if the comparison unit (300) identifies, on the basis of the first filter result (R1) and at least the second filter result (R2), a comparison result that deviates from a tolerance range.

2. Method according to Claim 1, wherein the respective filter specifications (K1, K2) are identical and the first filter device (FW1) and the second filter device (FW2) are produced with different operating systems and/or are manufactured by different manufacturers.

3. Method according to Claim 1 or 2, wherein the blocking (5) outputs an alarm signal (A).

4. Method according to one of the preceding claims, wherein the blocking (5) blocks data traffic between the first network (NW1) and the second network (NW2).

5. Method according to one of the preceding claims, wherein the blocking (5) is performed if the first filter result (R1) and the second filter result (R2) are transmitted at an interval of time and the interval of time is outside a prescribeable time period.

6. Method according to one of the preceding claims, wherein the first filter result (R1) transmitted is the first data packet (11) and/or the second filter result (R2) transmitted is the second data packet (12) if the respective data packet (11, 12) is identified as valid on the basis of the respective filter specification (K1, K2).

7. Method according to one of Claims 1 to 6, wherein the first filter result (R1) transmitted and/or the second filter result (R2) transmitted is/are a respective substitute packet (SR1, SR2) if the respective data packet (11, 12) is identified as invalid on the basis of the respective filter specification (K1, K2).

8. Method according to one of the preceding claims, wherein the comparison unit (300) is presented with the respective filter result (R1, R2) and with further filter results from a subsequently timed further check by the respective filter device (FW1, FW2), and the comparison result is thus obtained by taking account of the further filter results.

9. Network filter device (100) for filtering a data packet (10) between a first network (NW1) and a second network (NW2), comprising:
- a multiplication unit (200) for multiplying (1) the data packet (10) to produce a first data packet (11) and at least one second data packet (12), wherein a content of the data packet (10) can be produced identically in the first data packet (11) and at least in the second data packet (12), and for forwarding the first data packet (11) to a first filter device (FW1) and also at least the second data packet (12) to a second filter device (FW2);
- the first filter device (FW1) for checking (3) the first data packet (11) and the second filter device (FW2) for checking (3) the second data packet (12) according to respective filter specifications (K1, K2) and for respectively transmitting a first filter result (R1) and at least one second filter result (R2) to a comparison unit (300);
- the comparison unit (300) for blocking (5) the data packet (10) if, on the basis of the first filter result (R1) and at least the second filter result (R2), a comparison result that deviates from a tolerance range can be identified.

10. Network filter device (100) according to Claim 9, additionally comprising a monitoring unit for carrying out one of the method steps according to Claims 3 to 5.

## Revendications

1. Procédé de filtrage d'un paquet de données (10) par un dispositif de filtrage de réseau (100) entre un premier réseau (NW1) et un second réseau (NW2), comprenant les étapes suivantes :
- multiplication (1) du paquet de données (10) par une unité de multiplication (200) résultant en un premier paquet de données (11) et au moins un deuxième paquet de données (12), un contenu du paquet de données (10) étant produit à l'identique dans le premier paquet de données (11) et au moins dans le deuxième paquet de données (12) ;
- transmission (2) du premier paquet de données (11) à un premier dispositif de filtrage (FW1) et d'au moins le deuxième paquet de données (12) à un deuxième dispositif de filtrage (FW2) ;
- contrôle (3) du premier paquet de données (11) par le premier dispositif de filtrage (FW1) et d'au moins le deuxième paquet de données (12) par le deuxième dispositif de filtrage (FW2) conformément à des instructions de filtrage respectives (K1, K2) ;
- élaboration et transmission (4) d'un premier résultat de filtrage (R1) par le premier dispositif de filtrage (FW1) et d'au moins un deuxième résultat de filtrage (R2) par le deuxième dispositif de filtrage (FW1) à une unité de comparaison (300) ;
- blocage (5) d'une transmission du paquet de données (10) entre le premier réseau (100) et le second réseau (200) dans le cas où l'unité de comparaison (300) reconnaît, en fonction du premier résultat de filtrage (R1) et d'au moins le deuxième résultat de filtrage (R2), un résultat de comparaison s'écartant d'un domaine de tolérance.

2. Procédé selon la revendication 1, les instructions de filtrage respectives (K1, K2) étant identiques et le premier dispositif de filtrage (FW1) et le deuxième dispositif de filtrage (FW2) étant réalisés avec des systèmes d'exploitation différents et/ou étant fabriqués par des fabricants différents.

3. Procédé selon la revendication 1 ou 2, le blocage (5) ayant pour effet l'émission d'un signal d'alarme (A).

4. Procédé selon l'une des revendications précédentes, un trafic de données entre le premier réseau (RW1) et le second réseau (NW2) étant bloqué sous l'effet du blocage (5).

5. Procédé selon l'une des revendications précédentes, le blocage (5) étant exécuté dans le cas où le premier résultat de filtrage (R1) et le deuxième résultat de filtrage (R2) sont transmis avec un écart de temps et l'écart de temps se trouve en dehors d'un intervalle de temps pouvant être prédéterminé.

6. Procédé selon l'une des revendications précédentes, le premier paquet de données (11) étant transmis en tant que premier résultat de filtrage (R1) et/ou le deuxième paquet de données (12) en tant que deuxième résultat de filtrage (R2), dans le cas où le paquet de données respectif (11, 12) est reconnu comme valable en vertu de l'instruction de filtrage respective (K1, K2).

7. Procédé selon l'une des revendications 1 à 6, un paquet de substitution respectif (SR1, SR2) étant transmis en tant que premier résultat de filtrage (R1) et/ou en tant que deuxième résultat de filtrage (R2) dans le cas où le paquet de données respectif (11, 12) est reconnu comme non valable en vertu de l'instruction de filtrage respective (K1, K2).

8. Procédé selon l'une des revendications précédentes, le résultat de filtrage respectif (R1, R2) ainsi que des résultats de filtrage supplémentaires résultant d'un contrôle supplémentaire ultérieur par le dispositif de filtrage respectif (FW1, FW2) étant présentés à l'unité de comparaison (300), et les résultats de filtrage supplémentaires étant pris en compte pour la détermination du résultat de comparaison.

9. Dispositif de filtrage de réseau (100) pour le filtrage d'un paquet de données (10) entre un premier réseau (NW1) et un second réseau (NW2), comprenant :
- une unité de multiplication (200) pour la multiplication (1) du paquet de données (10) résultant en un premier paquet de données (11) et au moins un deuxième paquet de données (12), un contenu du paquet de données (10) pouvant être produit à l'identique dans le premier paquet de données (11) et au moins dans le deuxième paquet de données (12), et pour l'acheminement du premier paquet de données (11) vers un premier dispositif de filtrage (FW1) et d'au moins le deuxième paquet de données (12) vers un deuxième dispositif de filtrage (FW2) ;
- le premier dispositif de filtrage (FW1) pour le contrôle (3) du premier paquet de données (11) et le deuxième dispositif de filtrage (FW2) pour le contrôle (3) du deuxième paquet de données (12) conformément à des instructions de filtrage respectives (K1, K2), et pour la transmission respective d'un premier résultat de filtrage (R1) et d'au moins un deuxième résultat de filtrage (R2) à une unité de comparaison (300) ;
- l'unité de comparaison (300) pour le blocage (5) du paquet de données (10) dans le cas où, en fonction du premier résultat de filtrage (R1) et d'au moins le deuxième résultat de filtrage (R2), un résultat de comparaison s'écartant d'un domaine de tolérance peut être reconnu.

10. Dispositif de filtrage de réseau (100) selon la revendication 9, comprenant, en outre, une unité de surveillance pour l'exécution de l'une des étapes de procédé selon les revendications 3 à 5.
